# EUROPEAN PATENT APPLICATION

(11) **EP 4 574 311 A1**
(43) Date of publication of application: **25.06.2025**
(21) Application number: 23219437.3
(22) Date of filing: 21.12.2023
(51) Int. Cl.: B22F 7/06, B22F 7/08, B22F 10/28, B33Y 10/00, B33Y 80/00, C22C 33/02, B23P 15/28

(54) **METHOD OF ADDITIVE MANUFACTURING**

(71) Applicant: Seco Tools AB, 737 82 Fagersta (SE)
(72) Inventor: Matilainen, Ville-Pekka, SE-737 82 Fagersta (SE); Deirmina, Faraz, SE-737 82 Fagersta (SE)
(74) Representative: Sandvik

(57) **Abstract**

The invention relates to a method of additively manufacturing an object of a maraging steel by laser powder bed fusion (L-PBF) of a powder, said powder being composed of
i) Ni in an amount ranging from 10 to 15 wt%
ii) Co in an amount ranging from 12 to 16 wt%
iii) Mo in an amount ranging from 8 to 12 wt%
iv) Ti in an amount of up to 0.2 wt%
v) Al in an amount of up to 0.1 wt%
vi) C in an amount of up to 0.03 wt%;

and balance Fe; wherein the amount in wt% is based on the total weight of the powder;
said method comprising
i) depositing a layer of said powder on a build surface
ii) melting at least a part of said layer by means of a laser source,
iii) subjecting the layer to solidification and cooling
iv) depositing a further layer on at least the part of the previous layer that was subjected to melting, solidification and cooling according to steps ii) and iii)
v) melting, solidification and cooling of at least a part of the further layer deposited in step iv)
vi) repeating steps iv) and v),

wherein the deposition of said further layer is performed after an interlayer time of at least 25 seconds.
The invention also relates to a tool and an object which can be obtained by the method.

## Description

The present invention relates to a method of additive manufacturing of an object, in particular tool bodies for use in hybrid tools. The invention also relates to an object and tool obtainable by the method.

### Background of the invention

Additive manufacturing (AM), or three-dimensional (3D) printing, is a promising manufacturing technique that makes it possible to produce complex structures and bodies that cannot easily be achieved via conventional manufacturing processes.

When using laser powder bed fusion (L-PBF), a powder is subjected to melting followed by rapid solidification (cooling rate of 10⁴-10⁶ K/s). L-PBF is a layer-upon-layer additive manufacturing technique in which thin layers of metal powder are evenly distributed using a coating mechanism onto a substrate platform, usually a metal, that is fastened to an indexing table that moves in the vertical (Z) axis. This takes place inside a chamber containing a controlled atmosphere. Once each layer has been distributed, each 2D slice of the part geometry is fused by selectively melting the powder. This is accomplished with a laser source equipped with a high-power laser beam. The laser energy is intense enough to permit full melting (welding) of the particles in the form of a track or strip. Basically, once a track is done, the process is repeated with the next track, which is separated from the first one by a hatch spacing. The process is repeated layer after layer until the part is complete. The overhanging geometry is supported by unmelted powder from previous layers. After completing the process, the left-over powder is screened to be reused.

Maraging steels are a weldable class of ultra-high strength martensitic steels which can be welded without preheating either in the annealed or heat-treated condition. The martensitic microstructure of maraging steels is achieved through high nickel content as compared to most tool steels achieving their martensitic microstructure through a relatively high amount of carbon in the alloy composition.

Parts additively manufactured from many carbon-free steels such as carbon-free maraging steels (containing at most inconsiderable amounts of carbon < 0.03 wt%) which do not exhibit a sufficient as-built hardness may be subsequently subjected to ageing by furnace ageing or induction heating to increase the hardness.

Carbon-containing tool steels are commonly used to manufacture tool parts for metal cutting. However, such steels are difficult to process by L-PBF and generally need heat treatment at high temperatures of 800 to 1100 °C to provide for austenitizing, followed by quenching and tempering to provide acceptable mechanical properties.

Hybrid tool bodies composed of an additively manufactured part and a pre-manufactured tool holder back-end, sometimes referred to as a blank, are generally known from e.g. EP 4,000,772.

Back-ends of carbon-containing steels cannot, however, be reliably combined with additively manufactured parts which have undergone a final heat treatment since such heat treatment would destroy the microstructure and the dimensional stability of the pre-manufactured back-end on which the additively manufactured part is built.

An object of the present invention is thus to enable a method of manufacturing of tools, tool holder parts or tool bodies, in particular hybrid tools or tool bodies such as milling cutters, turning tools, drill bodies etc. with sufficient hardness in a time-efficient manner without jeopardizing the mechanical properties thereof including hardness, as well as such tools and objects obtainable from such method. A further object of the invention is to provide a method of providing tool bodies or tool parts having increased hardness while providing sufficient toughness and elongation-to-fracture levels. A further object of the invention is to provide a time-efficient method for manufacturing tool bodies with complex or intricate geometry which enables control of the hardness of the additively manufactured object which can dispense with subsequent heat treatment.

### The invention

The present invention relates to a method of additively manufacturing an object of a maraging steel by laser powder bed fusion (L-PBF) of a powder, said powder being composed of
i) Ni in an amount ranging from 10 to 15 wt%
ii) Co in an amount ranging from 12 to 16 wt%
iii) Mo in an amount ranging from 8 to 12 wt%
iv) Ti in an amount of up to 0.2 wt%
v) Al in an amount of up to 0.1 wt%
vi) C in an amount of up to 0.03 wt%;

and balance Fe; wherein the amount in wt% is based on the total weight of the powder;
said method comprising
   i) depositing a layer of said powder on a build surface
   ii) melting at least a part of said layer by means of a laser source
   iii) subjecting the layer to solidification and cooling
   iv) depositing a further layer on at least the part of the previous layer that was subjected to melting, solidification and cooling according to steps ii) and iii)
   v) melting, solidification and cooling of at least a part of the further layer deposited in step iv)
   vi) repeating steps iv) and v),
wherein the deposition of said further layer is performed after an interlayer time of at least 25 seconds.

According to one embodiment, the interlayer time is at least 26 seconds, preferably at least 27 seconds, preferably at least 28 seconds, preferably at least 29 seconds, preferably at least 30 seconds.

According to one embodiment, the interlayer time ranges from 25 to 60 seconds, for example from 30 to 60 seconds or from 30 to 50 seconds. If the interlayer time is shorter than 25 seconds, an insufficient or at least lowered hardness is obtained.

By the term "interlayer time" is meant the time elapsed from the point in time deposition of a layer n is initiated until the point in time the deposition of the subsequent layer n+1 is initiated. The interlayer time is preferably constant but may be varied within the scope of the invention depending on the desired hardness at different layers of the eventually obtained object.

By the term "object" is meant to include tool bodies, tool holder parts, and tools, in particular tool bodies or tool holder parts.

According to one embodiment, the build surface is a pre-manufactured back-end of a tool holder made of carbon-containing steel.

According to one embodiment, the cooling rate is from 10⁴ to 10⁶ K/s, preferably from 10⁵ to 10⁶ K/s.

According to one embodiment, at least 90 wt% of the particles of the powder have a particle size below 90 µm. According to one embodiment, at most 10 wt% of the particles of the powder have a particle size below 15 µm.

The invention also relates to a tool comprising a tool part of a maraging steel, having a composition corresponding to the powder composition as defined herein, built on a build surface made of a carbon-containing steel. According to one embodiment, the tool part is a tool holder part or a tool body. According to one embodiment, the build surface is a back-end blank or a back-end of a tool holder.

According to one embodiment, the tool holder part or tool body has an insert seat at which the hardness is at least 400 HV, preferably at least 430 HV, more preferably at least 440 HV.

According to one embodiment, the tool body or tool holder part has a minimum hardness in the range from 340 to 380 HV.

According to one embodiment, the tool body or told holder part has a Charpy V notch impact toughness ranging from 30 J to 60 J along the build direction and the direction transverse to the build direction.

According to one embodiment, the dislocation density of the tool body or tool holder part ranges from of 2.0 × 10¹⁵ to 3.0 × 10¹⁵ /m² as measured by EBSD.

The dislocation density was determined by EBSD (Electron backscattered diffraction). The EBSD measurement was conducted using a Symmetry EBSD detector on FE-SEM; SEM imaging using an acceleration voltage of 20 kV, specimen tilt of 70° and a working distance of 15 mm. In the EBSD analysis, the magnification was set to 5 kX, and a step size of 0.1 µm was used. Channel 5 suite (Tango mapping) was employed for the post processing of the EBSD data. The work of Konijnenberg et. al. was followed for the quantification of the geometrically necessary dislocations (GNDs) density in martensite (P.J. Konijnenberg, S. Zaefferer, D. Raabe, Assessment of geometrically necessary dislocation levels derived by 3D EBSD, Acta Mater. 99 (2015) 402-414. https://doi.org/10.1016/j.actamat.2015.06.051).

The invention also relates to an object or tool obtainable according to the method as specified herein.

According to one embodiment, the steel powder for production of the maraging steel is obtained by atomization in accordance with conventional processes. Commercially available maraging steel powders such as OSPREY^{®} MAR-60HRC-AM may suitably be used.

Each particle of the steel powder may be considered to comprise substantially the same ratio of the comprised elements. The particles of the powder or powder mixture may be sieved and blended from one or more gas atomization processes. The particles of the powder typically have a rounded or substantially spherical shape.

According to one embodiment, at least 90 wt% of the particles of the powder have a particle size lower than 500 µm, preferably lower than 200 µm as determined by sieving.

According to one embodiment, at most 10 wt% of the particles of the powder have a particle size lower than 15 µm and at least 90 wt% of the particles of the powder have a particle size lower than 53 µm.

According to one embodiment, at most 10 wt% of the particles of the powder have a particle size lower than 15 µm and at least 90 wt% of the particles of the powder have a particle size lower than 45 µm. Alternatively, at most 10 wt% of the particles of the powder have a particle size lower than 20 µm and at least 90 wt% of the particles have a particle size lower than 53 µm. The particle size distribution is determined by a Camsizer according to ISO 4497.

As heat treatment of the as-built object built on a carbon-containing steel build surface, such as a pre-manufactured back-end of a tool holder results in problems associated with insufficient dimensional accuracy and tolerance of the carbon-containing steel, the invention as defined herein involves no heat treatment such as solution annealing or ageing of the as-built object subsequent to steps i)-vi).

According to one embodiment, the method according to the invention comprises deposition of layers performed at an interlayer time shorter than as defined in claim 1. For example, certain portions of the object which do not need a maximal hardness level can be additively manufactured by L-PBF deposition of layers with an interlayer time shorter than as defined in claim 1. In this way, the method can be performed in a more time-efficient manner. However, preferably all layers or at least 90 % or 80 % or 70% or 60% or 50% of the layers are deposited in accordance with the interlayer time as specified in claim 1.

The cooling of the layer(s) is performed spontaneously in ambient temperature (room temperature), in the L-PBF machine in the selected atmosphere by simply removing the laser beam or switching off the laser power providing energy input to the forming layers. The cooling is preferably performed at atmospheric pressure.

According to one embodiment, a re-coater blade or roller spreads a thin layer of powder across a build surface.

As the layers are sequentially deposited, formerly deposited and solidified layers adjacent to the layer being deposited will remelt, usually at least two or three layers below the layer being deposited and solidified. This is due to the energy input from the laser beam and the relatively small thicknesses of the layers.

According to one embodiment, the thickness of the layers to be deposited ranges from 20 to 120 µm, preferably from 30 to 70 µm or 30 to 60 µm.

According to one embodiment, the laser power ranges from 200 to 400 W, preferably from 285 to 350 W.

According to one embodiment, a Renishaw RenAM 500 series L-PBF machine equipped with 500W Yb-fibre laser is used. However, other types of L-PBF machine may also be used. The object is preferably built in nitrogen or Argon atmosphere (<1000 ppm oxygen).

According to one embodiment, the laser scan speed is from 300 to 1400 mm/s, for example from 300 to 1200 mm/s, or from 600 to 1000 mm/s. Below 300 mm/s, the excess energy provided by the laser might lead to overheating and spatters which, if not properly dragged outside of the powder bed, would deposit on the powder layer which create voids in the printed object. Above 1400 mm/s, the energy provided by the laser to the powder might not be enough to form an optimal melt pool leading to balling effects.

According to one embodiment, the Volumetric Energy Density (VED) is preferably from 50 to 150 J/mm³, for example 50 to 120 J/mm³. VED expresses the amount of energy delivered per unit volume of powder deposited in the bed.

According to one embodiment, the hatch spacing ranges from 60 to 110 µm, more preferably from 70 to 100 µm. Below 60 µm, each point of the printed part might be remelted multiple times which might lead to overheating. Above 110 µm, unmelted powder might be trapped between two tracks.

### Examples

A metal powder OSPREY^{®} MAR-60HRC-AM having an elemental composition according to table 1 (corresponding to a maraging steel) was prepared by inert gas atomization.

**Table 1 - Maraging steel chemical composition in wt%**

| **Element** | **Ni** | **Co** | **Mo** | **Ti** | **Al** | **C** | **Fe** |
|---|---|---|---|---|---|---|---|
| MAR-60HRC | 13.0 | 15.0 | 10.0 | 0.2 | <0.1 | <0.03 | Bal. |

The powder composition of table 1 was used to additively manufacture the samples (tool bodies) on a back-end of a Seco-Capto^{™} tool holder using a Renishaw RenAM 500 series L-PBF machine equipped with 500W Yb-fibre laser. 90 wt% of the particles of the powder had a particle size below 90 µm (D90) and 10 wt% of the particles of the powder had a particle size below 15 µm (D10). The samples were built at the following process conditions:
Laser power: 300 W
Hatch spacing: 90 µm
Laser scanning speed: 800 mm/second
Layer thickness: 60 µm

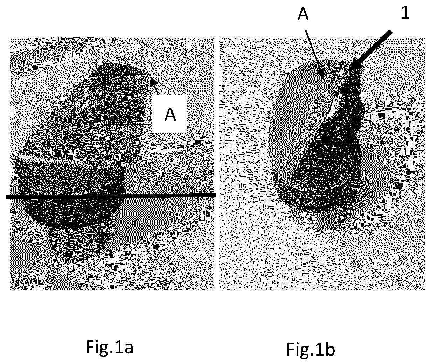

The manufactured as-built samples had a uniform hardness of 45 HRC at the insert seat (location A in figures 1a and 1b) as determined by ASTM E18 which meets the hardness requirements. The hybrid tool bodies of the invention were printed using a controlled interlayer time of 30 seconds.

In parallel, tool bodies for hybrid tool holders were additively manufactured in the same way but without any controlled interlayer time (the interlayer time was in average about 10 seconds) between sequentially deposited layers (referred to as AM part reference in table 2 below).

In table 2, it can be noted the inventive samples (AM part Invention) outperformed the reference (AM part Reference), in particular in view of the obtained hardness but also in view of the tensile strength obtained. The reference did not reach an acceptable hardness level at the insert seat (where insert 1 is positioned in figure 1b). Also, as evident from table 2, the wear performance of the invention outperformed the conventional carbon-containing steel tool holder (Seco-Capto^{™}) with respect to CVN impact toughness (cf. the "Capto material"). The Invention further had a Charpy V notch impact toughness along the build direction and the transverse direction to the build direction considerably higher than the requirements (i.e. >20 J).

**Table 2 - Results**

| | Material | Hardness | Tensile strength [MPa] | Elongation (%) | Heat treatment | CVN impact toughness | Wear Performance |
|---|---|---|---|---|---|---|---|
| Capto material | 25CrMo4 | 42-45 HRC | 1400 | Min 1 0 | Temper or induction hardening | >20J | 0 |
| AM part Invention | Maraging Steel (table 1) | Tunable 42 to 46 HRC | 1420 | Min 1 5 | none | >35J | + |
| AM part Reference | Maraging steel (table 1) | 35-39 HRC | 1180 | Min 1 7 | none | >50J | - |

The HRC hardness measurements were performed according to ASTM E18 and the Vickers hardness measurements were made according to ASTM E92. Elongation and tensile strength tests were performed according to ASTM E8-M. Impact toughness was evaluated using Instrumented Charpy V-notch (CVN) tests which were carried out according to the ASTM E2298 standard.

### Interlayer time

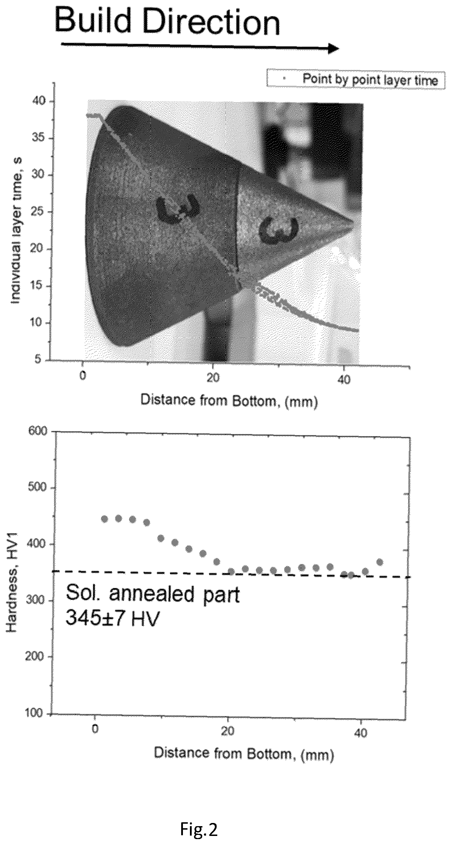

A cone was manufactured while gradually decreasing the interlayer time from a maximal to a minimal level. In figure 2, a variation in initial interlayer time of about 38 seconds (to build a first layer) and a final interlayer time of about 10 seconds (to build the final layer) was tested. By starting the formation of layers at the bottom of the cone with the largest cross-section and going to the top of the cone (with the smallest cross-section), gradually shortened interlayer times to build the various layers could be arranged without any additional control since each subsequent layer (with decreasing cross-section) needed a shorter time for deposition. It was observed the interlayer time was linked to the hardness level whereby it could be noted an interlayer time shorter than the invention resulted in a decrease in hardness (see table 2).

In figure 2, the axes "Distance from bottom (mm)" indicate how far the printed layer is located from the build surface where "0 mm" indicates the location of the firstly deposited layer forming the bottom of the cone (with the largest cross-section).

### Solution annealing

It was explored what impact solution annealing had on a sample built according to the AM reference with an interlayer time of about 10 seconds. As-built samples (of the AM reference) were subjected to solution annealing in a furnace for 2 hours at 960°C and 1000 °C respectively in Argon atmosphere followed by air cooling. The obtained hardness values of 345±7 HV are illustrated by the dotted line in Figure 2.

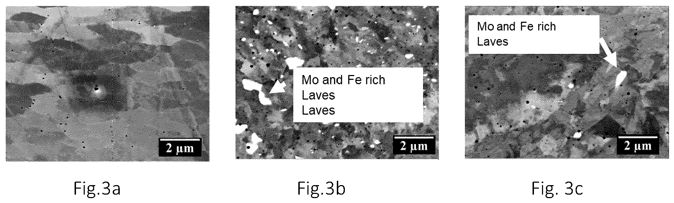

In the as built state (Invention sample), no traces of second phases rich in alloying elements (such as Mo and Fe laves) are found as evident from the image of figure 3a.

On the contrary, following solution annealing at 960°C and 1000°C of the AM reference samples, it is clear from the images of figures 3b and 3c that the samples during holding or cooling do not reach the rate of laser melting and solidification since formation of second phases and depletion of Mo and other elements (Ti, Al) from the matrix occurred leading to a decrease in hardness to 345 HV (as opposed to the invention sample). This also lowered the dislocation density of the solution annealed samples.

## Claims

1. Method of additively manufacturing an object of a maraging steel by laser powder bed fusion (L-PBF) of a powder, said powder being composed of
i) Ni in an amount ranging from 10 to 15 wt%
ii) Co in an amount ranging from 12 to 16 wt%
iii) Mo in an amount ranging from 8 to 12 wt%
iv) Ti in an amount of up to 0.2 wt%
v) Al in an amount of up to 0.1 wt%
vi) C in an amount of up to 0.03 wt%;
and balance Fe; wherein the amount in wt% is based on the total weight of the powder;
said method comprising
i) depositing a layer of said powder on a build surface
ii) melting at least a part of said layer by means of a laser source
iii) subjecting the layer to solidification and cooling
iv) depositing a further layer on at least the part of the previous layer that was subjected to melting, solidification and cooling according to steps ii) and iii)
v) melting, solidification and cooling of at least a part of the further layer deposited in step iv)
vi) repeating steps iv) and v),
wherein the deposition of said further layer is performed after an interlayer time of at least 25 seconds.

2. Method according to claim 1, wherein the interlayer time ranges from 30 to 50 seconds.

3. Method according to claim 1 or 2, wherein the build surface is a pre-manufactured back-end of a tool holder made of carbon-containing steel.

4. Method according to any one of claims 1 to 3, wherein the cooling rate is from 10⁴ to 10⁶ K/s.

5. Method according to any one of claims 1 to 4, wherein at least 90 wt% of the particles of the powder have a particle size below 90 µm.

6. Method according to any one of claims 1 to 5, wherein at most 10 wt% of the particles of the powder have a particle size below 15 µm.

7. Method according to any one of claims 1 to 6, wherein the laser scan speed ranges from 300 to 1400 mm/s.

8. Method according to any one of claims 1 to 7, wherein the hatch spacing ranges from 60 to 110 µm.

9. Tool comprising a tool part of a maraging steel having a composition corresponding to the powder composition of claim 1 built on a build surface made of a carbon-containing steel.

10. Tool according to claim 9, wherein the tool part is a tool holder part or a tool body.

11. Tool according to claim 9 or 10, wherein the build surface is a back-end blank or a back-end of a tool holder.

12. Tool according to any one of claims 9 to 11, wherein the tool holder part or tool body has an insert seat at which the hardness is at least 400 HV.

13. Tool according to any one of claims 9 to 12, wherein the tool body has a Charpy V notch impact toughness ranging from 30 J to 60 J along the build direction and the direction transverse to the build direction.

14. Tool according to any one of claims 9 to 13, wherein the dislocation density of the tool body or tool holder part ranges from of 2.0 × 10¹⁵ to 3.0 × 10¹⁵/m² as measured by EBSD.

15. Object or tool obtainable according to the method as claimed in any one of claims 1 to 8.
